# EUROPÄISCHE PATENTSCHRIFT

(11) **EP 3 929 466 B1**
(45) Veröffentlichungstag und Bekanntmachung des Hinweises auf die Patenterteilung: **07.08.2024**
(21) Anmeldenummer: 21181529.5
(22) Anmeldetag: 24.06.2021
(51) Int. Cl.: F16H 19/00, F16H 19/06

(54) **LINEARANTRIEB**
LINEAR DRIVE
ENTRAÎNEMENT LINÉAIRE

(30) Priorität: 25.06.2020 DE 102020116755
(43) Veröffentlichungstag der Anmeldung: 29.12.2021
(73) Patentinhaber: Zundel, Matthias, 63456 Hanau (DE)
(72) Erfinder: Zundel, Matthias, 63456 Hanau (DE)
(74) Vertreter: Duda, Rafael Thomas

(56) Entgegenhaltungen:
- DE-A1- 102005 029 827
- JP-A- 2000 318 972
- JP-A- 2019 060 403

## Beschreibung

Die vorliegende Erfindung betrifft einen Linearantrieb umfassend einen von einer Antriebsvorrichtung angetriebenen, in einer geführten linearen Bewegung entlang einer Führung beweglichen Schlitten sowie eine bewegliche Energiekette umfassend Leitungen zur Versorgung mindestens eines mittels des Linearantriebs verfahrbaren Aggregats mit elektrischer Energie und/oder einem Medium, wobei die Energiekette innerhalb eines stationären Gehäuses des Linearantriebs angeordnet ist, gegenüber dem der Schlitten des Linearantriebs verfahrbar ist und wobei das stationäre Gehäuse in dem sich die Energiekette befindet, nach außen hin weitgehend geschlossen ausgebildet ist.

Aus dem Stand der Technik sind Linearantriebe hinlänglich bekannt. Diese werden in den verschiedensten Bereichen der Technik eingesetzt, beispielsweise im Maschinenbau oder in der Gebäudetechnik. Es handelt sich um Antriebssysteme, die zu einer translatorischen Bewegung führen. Es werden hier verschiedene Antriebsvorrichtungen verwendet, beispielsweise Kugelgewindetriebe (Spindelantriebe), Zahnriemenantriebe oder elektrische Linearmotoren sowie hydraulische oder pneumatische Antriebseinrichtungen. Bei Linearantrieben wird in der Regel ein Schlitten in einer linearen Bewegung mittels der Linearantriebsvorrichtung entlang einer Führungseinrichtung bewegt.

Ein elektrischer Linearantrieb wird beispielsweise in der DE 20 2007 002 504 U1 beschrieben. Linearantriebe, die im Maschinenbau eingesetzt werden, benötigen diverse Leitungen, teils für die Medienzufuhr (zum Beispiel Druckluft) oder elektrische Steuerleitungen, Vakuumleitungen, Leitungen für die elektrische Energieversorgung, etc. beispielsweise für diejenigen Aktuatoren, die auf dem Schlitten angeordnet sind und mit diesem linear in eine gewünschte Position verfahren werden. Um diese Leitungen bei der Bewegung des Schlittens so zu bewegen, dass immer der kleinste zulässige Biegeradius der in der Energiekette verlegten Leitungen gewährleistet ist und eine zu große Belastung der Leitungen vermieden wird, verwendet man im allgemeinen so genannte Energieketten, die aus dem Schlitten herausragen, wie dies auch in der vorgenannten Schrift aus dem Stand der Technik der Fall ist. Die Energieketten verlaufen bei den bekannten Vorrichtungen in jedem Fall außerhalb der Linearachse.

In der DE 10 2005 029 827 A1 wird ein Linearantrieb beschrieben, bei dem sich die Energiekette in einem Gehäuse befindet, welches seitlich offen dargestellt ist, aber gemäß der Beschreibung eine in der Zeichnung nicht dargestellte seitliche Abdeckung aufweisen kann.

Die DE 41 01 907 A1 beschreibt eine Führungsvorrichtung für die Leitungen von Schiebeantrieben, bei der eine Energiekette in Form eines rohrförmigen Gliedergehäuses in einer weitgehend geschlossenen Hohlschiene untergebracht ist. In der Hohlschiene bewegt sich ein Anschlussschlitten, der mit der Energiekette verbunden ist.

Die EP 1 795 401 A1 offenbart eine Vorrichtung zur drahtgebundenen Versorgung von insbesondere flächigen, in einer Führung befindlichen verschieblichen Objekten mit elektrischer Energie, bei der eine Folienleiteranordnung in einem bis auf eine Nut geschlossenen zylindrischen Hohlprofil untergebracht ist, wobei in der Nut ein Gleitkörper geführt ist. Die JP 2000 318972 A offenbart einen Linearantrieb mit einem Schlitten, einen Antriebsrad, und einen Zahnriemen der in einem kraftschlüssigen Eingriff mit der Unterseite des Schlittens steht, und sorgt so für den Antrieb des Schlittens entlang der Linearachse.

Die Energieketten haben eine vergleichsweise große Oberfläche, so dass die Gefahr besteht, dass sie mit der Zeit verschmutzen. Dies ist problematisch im Falle von Anwendungen, bei denen die Linearantriebe in Reinräumen eingesetzt werden, da sich Schmutz an den zerklüfteten Oberflächen der Energieketten anlagert und diese nur schwierig zu reinigen sind. Da die Energieketten ständig bewegt werden, wird dieser Schmutz aufgewirbelt und gelangt in die Umgebung. Außerdem entsteht an der Energiekette durch deren Bewegung Abrieb, der sich ebenfalls als Verschmutzung ablagert, was dazu führt, dass die geforderten Reinraumbedingungen nicht eingehalten werden können.

Hier setzt die vorliegende Erfindung an. Die Aufgabe der Erfindung besteht darin, einen Linearantrieb der eingangs genannten Art zur Verfügung zu stellen, der so ausgerüstet ist, dass auch bei Vorhandensein einer Energiekette ein Einsatz des Linearantriebs unter Reinraumbedingungen problemlos möglich ist.

Die Lösung dieser Aufgabe liefert ein erfindungsgemäßer Linearantrieb der eingangs genannten Art mit den Merkmalen des Anspruchs 1.

Erfindungsgemäß ist das stationäre Gehäuse, welches auch die Energiekette umschließt, in demjenigen Bereich, in dem der verfahrbare Schlitten mindestens teilweise aus dem stationären Gehäuse herausgeführt ist, durch ein Abdeckband verschlossen, welches zusammen mit dem Schlitten verfahrbar ist

Unter dem Begriff "weitgehend geschlossen", welcher eingangs bezogen auf das stationäre Gehäuse verwendet wird, ist im Sinne der vorliegenden Erfindung zu verstehen, dass die Energiekette möglichst an allen Seiten von einer Wand des Gehäuses umgeben und so gegenüber der Umgebung des Gehäuses geschützt wird, wobei bei herkömmlichen Konstruktionen nach dem Stand der Technik allerdings zumeist ein Schlitz verbleibt, durch den die Verbindung zwischen dem Schlitten und dem im Gehäuse untergebrachten Schlittenantrieb hindurchragt. Dieser im Stand der Technik noch vorhandene Schlitz wird jedoch bei der erfindungsgemäßen Lösung durch das Abdeckband ebenfalls verschlossen.

Bei der erfindungsgemäßen Lösung ist somit die Energiekette vor Verschmutzung geschützt, dadurch, dass sie nicht wie sonst üblich während ihrer Bewegung mit der Umgebungsluft in Kontakt kommt und somit auch keinen Staub aufwirbelt, der sich an der unruhigen strukturierten Oberfläche der Energiekette ablagern kann. Vielmehr befindet sich die bei der Bewegung des Schlittens mit diesem bewegliche Energiekette im Inneren eines stationären Gehäuses, in dem auch Aggregate des Linearantriebs, die den Schlitten antreiben, untergebracht sind.

Gemäß einer bevorzugten Weiterbildung der Erfindung erstreckt sich dieses stationäre Gehäuse in Längsrichtung entlang der Verfahrrichtung des Schlittens. Beim Verfahren legt der Schlitten eine Wegstrecke gemäß seinem vorgesehenen Hub zurück. Dieses Verfahren des Schlittens kann entlang des stationären Gehäuses erfolgen, innerhalb dessen die Energiekette untergebracht ist. Die Bewegung, die die Energiekette bei diesem Verfahrvorgang des Schlittens entlang seiner Linearachse vollzieht, kann analog sein wie bei einer herkömmlichen Energiekette, jedoch mit der Maßgabe, dass diese Bewegung im Inneren des stationären Gehäuses erfolgt, welches die Energiekette umschließt.

Gemäß einer bevorzugten Weiterbildung der vorliegenden Erfindung ist das stationäre Gehäuse im montierten Zustand des Linearantriebs unterhalb oder oberhalb des Schlittens oder neben dem Schlitten angeordnet. Diese alternativen Möglichkeiten ergeben sich durch die jeweilige relative Anordnung des Schlittens bezüglich der diesen antreibenden Aggregate des Linearantriebs bzw. durch die Ausrichtung des Schlittens im Raum. In den meisten Fällen befinden sich die Linearachse und der Linearantrieb unterhalb des Schlittens. Grundsätzlich ist es aber auch möglich, dass der Schlitten an der Unterseite und somit unterhalb eines Linearantriebs verfährt oder aber der Schlitten verfährt seitlich neben der Linearachse und den Antriebsaggregaten. Sinnvoll ist es demnach, die Energiekette immer dort unterzubringen, wo sich Aggregate des Linearantriebs befinden, die in der Regel zum Schutz zumindest in Teilen in einem Gehäuse untergebracht sind, so dass man dieses bereits vorhandene stationäre Gehäuse auch für die geschützte Unterbringung der Linearkette nutzen kann.

Gemäß der vorliegenden Erfindung ist das stationäre Gehäuse, in dem sich die Energiekette befindet, nach außen hin weitgehend geschlossen ausgebildet. Dadurch wird jeglicher Kontakt der sich bei der Linearbewegung des Schlittens bewegenden Energiekette mit der äußeren Umgebung außerhalb des stationären Gehäuses vermieden. Auf diese Weise ist es möglich, außerhalb des stationären Gehäuses beispielsweise die Bedingungen eines Reinraumes oder Reinstraumes zu erfüllen. In der Regel ist es technisch nicht schwierig, die Energiekette in einem nach allen Seiten hin weitgehend geschlossenen Gehäuse unterzubringen. Lediglich dort wo die Verbindung zwischen den Antriebsaggregaten des Linearantriebs und dem entlang der Linearachse beweglichen Schlitten vorgesehen ist, ist eine Verbindung notwendig, die aus dem Gehäuse herausführt, wenn die Antriebsaggregate vollständig im Inneren des stationären Gehäuses untergebracht sind, um die Antriebskraft auf den Schlitten zu übertragen. Diese sonst noch verbleibende Verbindung wird erfindungsgemäß durch das Abdeckband geschlossen. Die übrigen Bereiche können problemlos durch Wände oder Begrenzungen eines Gehäuses mit nahezu beliebiger geometrischer Form als geschlossene Einfassung/Einhausung ausgebildet sein.

Gemäß der vorliegenden Erfindung ist das stationäre Gehäuse, welches auch die Energiekette umschließt, in demjenigen Bereich, in dem der verfahrbare Schlitten mindestens teilweise aus dem stationären Gehäuse herausgeführt ist, durch ein Abdeckband verschlossen, welches vorzugsweise zusammen mit dem Schlitten verfahrbar ist. Durch ein solches Abdeckband kann man auch denjenigen Bereich zwischen dem Inneren des stationären Gehäuses und dem Schlitten verbinden, in dem sich die Verbindung zwischen der Antriebsvorrichtung und dem Schlitten befindet. Ohne ein solches Abdeckband wäre in der Regel ein offener Schlitz erforderlich, durch den die Verbindungselemente zum Schlitten hindurchragen, weil diese Verbindungselemente sich ja beim Verfahren des Schlittens entlang der Linearachse in Verfahrrichtung bewegen müssen, so dass sich wiederum eine schlitzförmige Öffnung des stationären Gehäuses zur Umgebung hin in diesem Bereich ergeben würde. Dadurch dass sich das erfindungsgemäße Abdeckband jedoch mit dem linear verfahrenden Schlitten bewegt, wird der in der Konstruktion sonst erforderliche Längsschlitz im stationären Gehäuse abgedeckt. Das Abdeckband fährt immer mit dem Schlitten entlang der Linearachse mit, so dass das stationäre Gehäuse an der dem Schlitten zugewandten Seite stets von dem Abdeckband verschlossen wird.

Gemäß einer bevorzugten Weiterbildung der Erfindung weist das stationäre Gehäuse, welches auch die Energiekette umschließt, eine langgestreckte, im Querschnitt polygonale, insbesondere rechteckige Geometrie auf oder eine etwa zylindrische Geometrie. Eine langgestreckte Geometrie wird in der Regel durch die Linearachse vorgegeben, da der Hub des Schlittens entlang der Linearachse (x-Richtung) im allgemeinen erheblich größer ist als die für die Unterbringung der Antriebsvorrichtung des Schlittens im stationären Gehäuse erforderliche Abmessung (Breite) des Gehäuses quer zur Richtung der Linearachse (also in y-Richtung). Bei einem überwiegend runden Querschnitt ergibt sich für das stationäre Gehäuse somit eine im Wesentlichen zylindrische Geometrie. Bei einem rechteckigen Querschnitt ergibt sich beispielsweise eine längliche Quaderform.

Vorzugsweise weist beispielsweise das stationäre Gehäuse eine insgesamt etwa quaderförmige Geometrie auf, so dass das Gehäuse drei vollständig verschlossene Seitenflächen, insbesondere starre Seitenflächen haben kann und sich insgesamt etwa eine Kastenform ergibt. Die dann verbleibende vierte Fläche der Quaderform, in deren Bereich sich der Schlitten bewegt, kann dann über das Abdeckband verschlossen werden. Hat das stationäre Gehäuse hingegen eine insgesamt etwa zylindrische Geometrie, kann das Abdeckband eine sich über einen Teilumfang der Zylinderform erstreckende Teilfläche des Zylindermantels verschließen und in den übrigen Bereichen kann man das stationäre Gehäuse beispielsweise mit einer starren Wandung ausstatten, so dass sich für das stationäre Gehäuse insgesamt eine etwa rohrförmige Geometrie ergibt.

Das stationäre Gehäuse kann beispielsweise vollständig aus Blechbauteilen aufgebaut sein, was eine kostengünstige Fertigung ermöglicht. Dies gilt sowohl für Varianten des Gehäuses, die einen rechteckigen oder polygonalen Querschnitt haben als auch für solche, die im Wesentlichen zylindrisch ausgebildet sind. Die einzelnen Komponenten des Gehäuses aus Blech können jeweils geschnitten, entsprechend verformt und miteinander verbunden werden, um so das Gehäuse zu fertigen.

Gemäss der Erfindung, ist das Abdeckband als endlos umlaufendes Band ausgebildet mit einem Lasttrum, welches mit dem Schlitten kraftschlüssig verbunden ist und einem zu dem Lasttrum etwa parallel und mit Abstand verlaufenden Leertrum, über das das Abdeckband nachführbar bzw. zurückführbar ist. Im Prinzip hat das Abdeckband eine ähnliche Funktionalität wie ein endloses Förderband. Auf seiner dem verfahrbaren Schlitten zugewandten Seite steht dann das Abdeckband mit dem Schlitten in Verbindung und fährt mit diesem entlang der Linearachse hin und her und verschließt dabei gleichzeitig diesen Bereich des stationären Gehäuses nach außen hin. Im Inneren des Schlittens verfährt dabei das Leertrum des Abdeckbands und liefert stets neues Abdeckband nach, so dass beim Verfahren des Schlittens der Bereich hinter dem Schlitten stets durch nachgeführtes Abdeckband verschlossen wird bzw. verschlossen bleibt.

Dabei kann beispielsweise gemäß einer bevorzugten Weiterbildung der Erfindung das Abdeckband jeweils etwa in den endseitigen Bereichen des Gehäuses über Umlenkrollen geführt werden, so dass man ein quasi endloses Abdeckband hat, welches im Inneren des stationären Gehäuses beispielsweise jeweils etwa in den Endbereichen (in Längsrichtung gesehen) umgelenkt wird, so dass ein Obertrum und ein Untertrum miteinander zu einem endlosen Abdeckband verbunden sind, welches dort wo es das Gehäuse nach außen hin verschließt mit dem Schlitten verfährt und an der dem Schlitten abgewandten Unterseite im Gehäuse zurückgeführt wird.

Die Verbindung des Abdeckbands mit dem Schlitten kann man gemäß einer möglichen konstruktiven Ausführungsvariante der Erfindung beispielsweise so lösen, dass das Abdeckband in den Korpus des Schlittens integriert ist und vorzugsweise den Schlitten in dessen Querrichtung durchsetzt. Das Abdeckband kann beispielsweise in den Schlitten eingeschoben und dort verklemmt sein, verschraubt sein und anderweitig mit dem Schlitten kraftschlüssig verbunden sein.

Gemäß einer bevorzugten Weiterbildung der vorliegenden Erfindung umfasst der Schlitten eine Schlittenplatte, in deren Bereich Aktuatoren anbringbar sind, wobei diese Aktuatoren vorzugsweise im Bereich einer Fläche des Schlittens, die der Verbindung des Schlittens zu der Antriebsvorrichtung gegenüberliegt, anbringbar sind. Diese Schlittenplatte kann sich beispielsweise an der Oberseite des Schlittens befinden, wenn sich die Antriebsvorrichtung unterhalb des Schlittens befindet oder an der Unterseite des Schlittens, sofern dieser unterhalb der Antriebsvorrichtung verfährt oder an einer Seitenfläche oder an der Oberseite des Schlittens, wenn der Schlitten beispielsweise neben der Antriebsvorrichtung angeordnet ist und linear verfährt. Die jeweiligen geometrischen Verhältnisse können hier jedoch im Prinzip weitgehend beliebig gewählt werden. Es können einer oder mehrere Aktuatoren an einer solchen Schlittenplatte angebracht werden.

Es sind auch Varianten der Erfindung möglich, bei denen mehr als ein Schlitten bzw. mehr als eine Schlittenplatte vorhanden sind, die sich in linearer Richtung in einer Vorrichtung mit nur einem stationären Gehäuse bewegen. Bei einer solchen Variante mit zwei oder mehreren Schlittenplatten können sich diese bei geeigneter Ausbildung des Linearantriebs auch gegebenenfalls voneinander unabhängig bewegen.

Gemäß einer bevorzugten Weiterbildung der vorliegenden Erfindung ist die Energiekette mit einem ersten Ende an dem Schlitten angebracht und ist mit einem zweiten Ende an einer Seitenwand des stationären Gehäuses angebracht, welche in Querrichtung gesehen dem ersten Ende gegenüberliegt. Die Energiekette ist verformbar gestaltet und nimmt die für die Versorgung der Aktuatoren erforderlichen Leitungen für Medien, Steuerung, Energieversorgung etc. auf. Aufgrund dieser Verformbarkeit kann sie sich beim Verfahren des Schlittens Verformen, so dass sich ihr erstes Ende mit dem Schlitten mitbewegen kann, wobei der Verformbarkeit aber Grenzen gesetzt sind dadurch, dass die Energiekette bei der linearen Bewegung innerhalb des Gehäuses liegt und somit vorzugsweise unterhalb des Abdeckbands, so dass keine Gefahr besteht, dass die Energiekette verschmutzt.

Gemäß einer weiteren bevorzugten Weiterbildung der Erfindung nimmt die Energiekette in der Draufsicht gesehen in der linken Hubendlage in etwa eine J-Form ein. Diese Form ist einerseits an die langgestreckte, bevorzugt quaderförmige oder zylindrische Geometrie des langgestreckten Gehäuses angepasst, durch die die Abmessungen im Innenraum des Gehäuses in Querrichtung vergleichsweise schmal sind. Andererseits sind die beiden Enden so mit dem verfahrbaren Schlitten einerseits bzw. dem stationären Gehäuse andererseits verbunden, dass die in der beweglichen Energiekette untergebrachten Leitungen beim Verfahren des Schlittens keinen zu engen Biegeradius einnehmen, so dass die typische Funktion der Energiekette, die Leitungen vor engen Biegeradien zu schützen, erhalten bleibt.

Gemäß einer bevorzugten Weiterbildung der Erfindung ist für den Schlitten des Linearantriebs eine schmierstofffreie (wartungsfreie) Führung aus Kunststoff und/oder Metall, vorzugsweise aus einer Werkstoffkombination Kunststoff/Metall vorgesehen. Beispielsweise kann man als geführtes Element an dem Schlitten eine Buchse aus Kunststoff anbringen, die in einer als Schiene ausgebildeten Führung aus Metall geführt ist. Bei einer derartigen Werkstoffkombination ermöglicht man eine schmierstofffreie und somit wartungsfreie oder sehr wartungsarme Führung. Für die Kunststoffkomponente der Werkstoffkombination kommen beispielsweise spezifische Kunststoffe mit sehr guten Gleiteigenschaften in Betracht, wie zum Beispiel Niederdruck-Polyethylene, Fluorpolymere oder dergleichen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte perspektivische Ansicht eines erfindungsgemäßen Linearantriebs;
Figur 2 eine entsprechende Draufsicht auf den Linearantrieb bei Entfernung des Abdeckbands, so dass man auf das Innere des Gehäuses schaut;
Figur 3 eine ähnliche Ansicht wie in Figur 2, wobei sich jedoch der Schlitten in einer anderen Hubendlage befindet;
Figur 4 eine perspektivische Detailansicht des Linearantriebs im Bereich des Schlittens;
Figur 5 eine entsprechende Seitenansicht des in Figur 4 dargestellten Details des Linearantriebs.

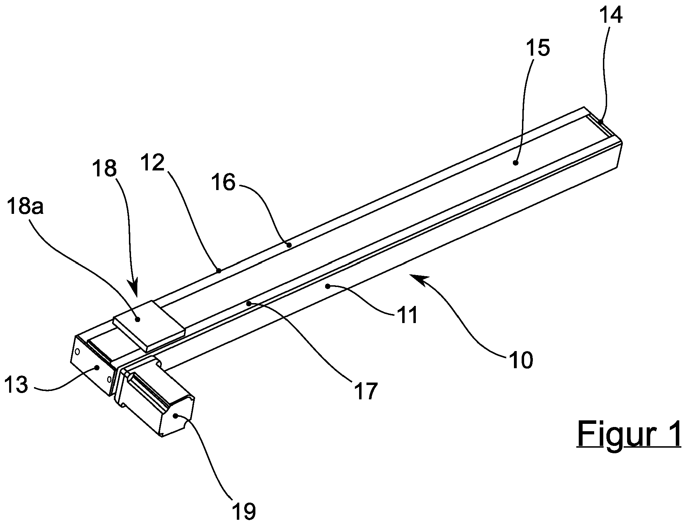

Nachfolgend wird zunächst auf die Figur 1 Bezug genommen. Diese zeigt beispielhaft eine mögliche Ausführungsform eines erfindungsgemäßen Linearantriebs, welcher ein stationäres Gehäuse 10 umfasst. Dieses stationäre Gehäuse hat beispielsweise eine langgestreckte Quaderform und weist eine erste Seitenwand 11 auf, eine zweite Seitenwand 12, welche der ersten Seitenwand gegenüberliegt und etwa parallel zu dieser verläuft, eine erste Stirnwand 13, die das Gehäuse 10 in seinem einen Endbereich verschließt und eine zweite Stirnwand 14. An der Oberseite ist das stationäre Gehäuse 10 nicht vollständig über eine starre Gehäusewand verschlossen, sondern es sind jeweils an beiden Seiten nur kurze Abwinklungen 16, 17 vorgesehen, die jeweils etwa einen rechten Winkel mit der entsprechenden Seitenwand 11, 12 einnehmen und sich jeweils von der Seitenwand ausgehend einwärts erstrecken, so dass die beiden Abwinklungen 16, 17 aufeinander zu gerichtet sind. Zwischen diesen beiden Abwinklungen 16, 17 verbleibt ein breiter Spalt, welcher durch ein Abdeckband 15 verschlossen wird, so dass in dem vorliegenden Ausführungsbeispiel dieses Abdeckband 15 die Oberseite des stationären Gehäuses 10 im Bereich dieses Spaltes verschließt, so dass man die Energiekette, die im Inneren des stationären Gehäuses 10 liegt, in der Figur 1 nicht sehen kann.

Der in dem Ausführungsbeispiel von Figur 1 dargestellte Linearantrieb umfasst einen Schlitten 18 mit einer oberseitigen Schlittenplatte 18 a, die sich hier etwa horizontal erstreckt. Der Schlitten 18 ist in einer translatorischen Bewegung entlang der Linearachse verfahrbar und wird dabei von einem Antriebsmotor 19, beispielsweise einem Schrittmotor oder Servomotor angetrieben, welcher seinerseits einen in Figur 1 nicht erkennbaren Antriebsriemen, insbesondere Zahnriemen antreibt. Der Schlitten 18, der in der Figur 1 in einer (bezogen auf die Zeichnung) linken Endhublage dargestellt ist, bewegt sich bei Betätigung des Antriebs in der Zeichnung von links nach rechts in einer translatorischen Bewegung entlang einer Führung im Prinzip auf einer linearen Bahn, die den Spalt zwischen den beiden Abwinklungen 16, 17 überstreicht, wobei er von einer Antriebsvorrichtung angetrieben wird, die in dem Gehäuse 10 unterhalb des Abdeckbands 15 angeordnet ist. An der Schlittenplatte 18 a des Schlittens 18 sind hier nicht dargestellte Aktuatoren angebracht, die mittels des Linearantriebs in an sich bekannter Weise mit dem Schlitten entlang der Linearachse verfahren.

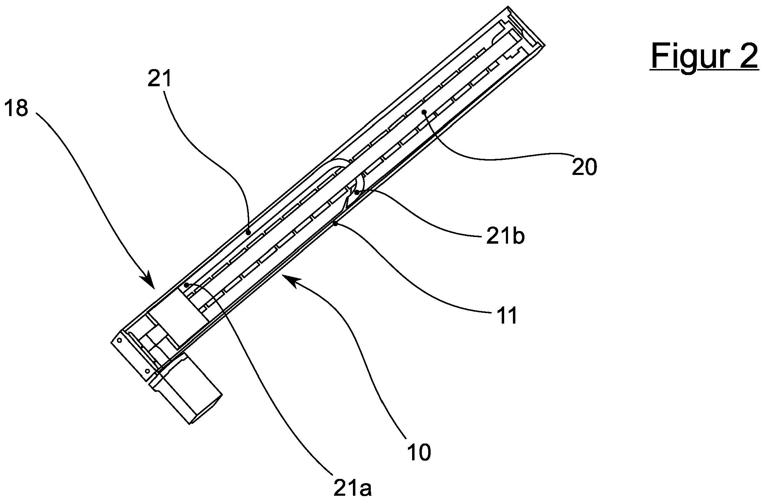

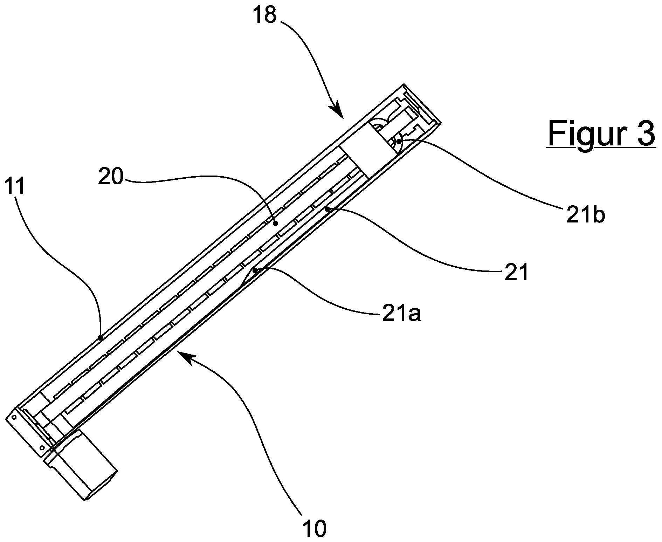

Weitere Einzelheiten des erfindungsgemäßen Linearantriebs ergeben sich aus den Figuren 2 und 3, auf die nachfolgend Bezug genommen wird. In der Draufsicht gemäß Figur 2 wurde das Abdeckband 15 entfernt, so dass man nun in das Innere des Gehäuses 10 hineinschauen kann. Man erkennt in Figur 2 die Linearführung 20, an der entlang sich der Schlitten 18 bei seiner Hubbewegung bewegt. Weiterhin erkennbar ist die Energiekette 21, die in dem langgestreckten Gehäuse 10 untergebracht ist, welches aufgrund seines etwa rechteckigen Querschnitts einen etwa quaderförmigen Hohlraum umschließt, welcher etwa in seiner Mitte die sich in Längsrichtung erstreckende Linearführung 20 aufnimmt. In der hier gezeigten linken Hubendlage nimmt die Energiekette 21 im Grundriss gesehen in etwa eine J-Form ein, wobei sie an ihrem ersten Ende 21 a in Bezug auf die Linearachse außermittig an dem Schlitten 18 angebracht ist und mit ihrem anderen Ende 21 b auf der in Querrichtung dem ersten Ende gegenüberliegenden Seite an der ersten Seitenwand des stationären Gehäuses 10 angebracht ist. Die Energiekette liegt, wenn der Schlitten 18 verfährt, immer im Inneren des stationären Gehäuses 10. Das erste Ende der Energiekette 21 bewegt sich beim Verfahren des Schlittens 18 entlang der Linearführung 20 immer in Längsrichtung mit, während das zweite Ende 21 b an der Innenseite der ersten Seitenwand 11 des Gehäuses festgelegt ist. Die Energiekette 21 kann sich somit beim Verfahren des Schlittens 18 zwar verformen, ihre Breite in Querrichtung des Gehäuses 10 ist aber durch die Abmessung des Innenraums des Gehäuses in Querrichtung festgelegt.

Wenn man nun die Figuren 2 und 3 miteinander vergleicht, in denen die Energiekette 21 einmal in der linken Hubendlage und einmal in der rechten Hubendlage dargestellt ist, dann wird deutlich, dass sich beim Verfahren des Schlittens 18 entlang der Linearachse der zunächst lange Schenkel der J-Form jenseits der mittigen Linearführung 20 nach und nach verkürzt, während sich der zunächst kurze Schenkel der J-Form auf der anderen Seite der Linearführung nach und nach verlängert, so dass in der rechten Hubendlage die Energiekette 21 wieder in etwa eine J-Form einnimmt, die zu derjenigen in der linken Hubendlage gespiegelt ist, sich dabei allerdings gleichzeitig in Längsrichtung innerhalb des Gehäuses verschoben hat. In jeder Hubposition des Schlittens 18 liegt die Energiekette 21 im Inneren des stationären Gehäuses, wobei sie unter der Linearführung 20 hindurch zu den zweiten Ende 21 b hin geführt und dort an der Innenseite der Seitenwand 11 befestigt sein kann.

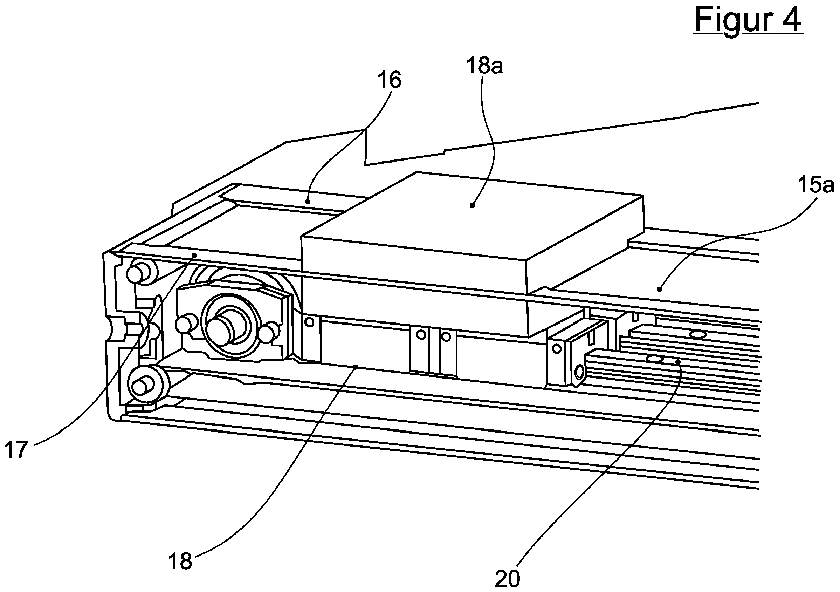

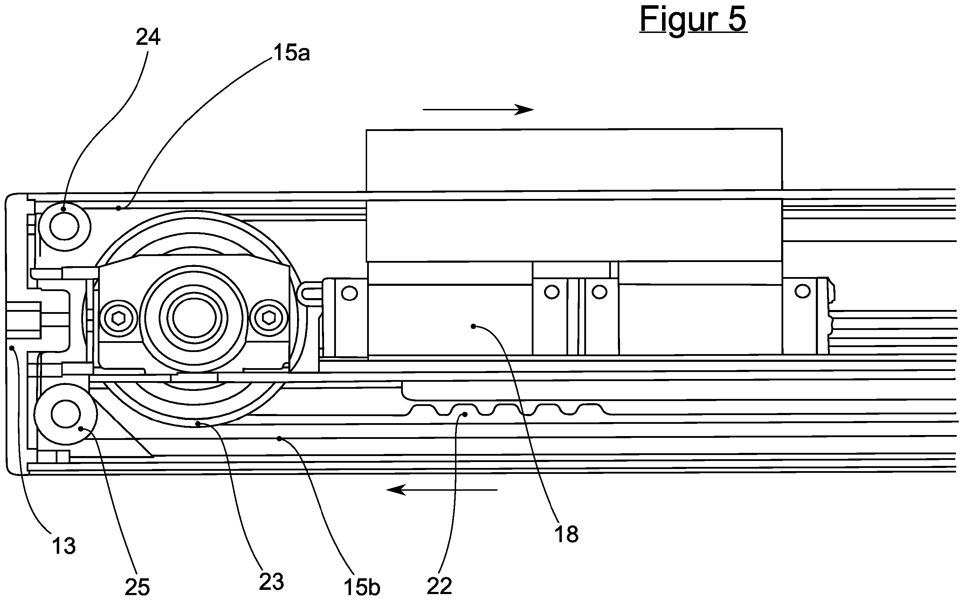

Nähere Einzelheiten betreffen das Abdeckband 15 und dessen Unterbringung und Führung innerhalb des stationären Gehäuses 10 ergeben sich aus den Detaildarstellungen gemäß den Figuren 4 und 5, auf die nachfolgend Bezug genommen wird. Figur 4 zeigt im vergrößerten Maßstab einen Detailausschnitt des Gehäuses in perspektivischer Ansicht, wobei die vordere Seitenwand 11 des Gehäuses 10 weggelassen wurde, so dass man in das Innere des Gehäuses 10 schaut. Der Schlitten 18 befindet sich hier in der linken Hubendlage. Man erkennt, dass das obere Trum (Lasttrum) 15 a des Abdeckbands quasi in deren Schlittenplatte 18 a verklemmt ist und diese quasi in Querrichtung durchsetzt, so dass das obere Trum des Abdeckbands auf diese Weise mit der Schlittenpatte 18 a fest verbunden ist. Weiterhin ist erkennbar, dass der untere Teil des Schlittens 18 in der Linearführung 20 geführt ist, die beispielsweise aus zwei parallelen Schienen besteht, die in Längsrichtung und somit Verfahrrichtung des Schlittens im Gehäuse angeordnet sind. Im Bereich der Schlittenplatte 18 a, oberhalb des Abdeckbands 15 a läuft die Schlittenplatte in ihren beiden jeweils äußeren Bereichen auf den beiden kurzen horizontalen Abwinklungen 16, 17 des Gehäuses, wie man auch in Figur 1 erkennen kann.

Weitere Einzelheiten des Linearantriebs ergeben sich aus der vertikalen Schnittansicht gemäß Figur 5. Man erkennt dort den Zahnriemen 22, der über ein endseitig im Gehäuse untergebrachtes Antriebsrad 23 geführt ist, welches wiederum von einem Antriebsmotor 19 (siehe Figur 1) rotierend angetrieben wird. Dieser Zahnriemen 22 steht in einem kraftschlüssigen Eingriff mit der Unterseite des Schlittens 18 und sorgt so für den Antrieb des Schlittens 18 entlang der Linearachse. Weiterhin sieht man in Figur 5, dass das obere Trum 15 a des Abdeckbands über eine endseitig im oberen Bereich im Gehäuse nahe der ersten Stirnwand 13 angeordneten oberen Umlenkrolle 14 umgelenkt wird um etwa 90° und dass das Abdeckband dann weiterhin über eine darunter im unteren Bereich des Gehäuses angeordnete untere Umlenkrolle 25 erneut um etwa 90° umgelenkt wird, so dass sich insgesamt eine Umlenkung um etwa 180° ergibt und das endlose Abdeckband 15 bei Bewegung des Schlittens 18 in Pfeilrichtung aus dem unteren Trum (Leertrum) 15 b nachgeführt wird, so dass der Bereich hinter dem Schlitten 18 immer von dem Abdeckband 15 a abgedeckt und das Gehäuse 10 immer oberseitig geschlossen ist. Daher liegt die im stationären Gehäuse 10 untergebrachte Energiekette 21 (siehe Figuren 1 und 2) immer geschützt im Inneren des Gehäuses 10 und kann nicht verschmutzen.

### Bezugszeichenliste

- 10: stationäres Gehäuse
- 11: erste Seitenwand
- 12: zweite Seitenwand
- 13: erste Stirnwand
- 14: zweite Stirnwand
- 15: Abdeckband
- 15 a: oberes Trum des Abdeckbands
- 15 b: unteres Trum des Abdeckbands
- 16: kurze Abwinklung
- 17: kurze Abwinklung
- 18: Schlitten
- 18 a: Schlittenplatte
- 19: Antriebsmotor
- 20: Linearführung
- 21: Energiekette
- 21 a: erstes Ende der Energiekette
- 21 b: zweites Ende der Energiekette
- 22: Zahnriemen, Antriebsriemen
- 23: Antriebsrad
- 24: obere Umlenkrolle
- 25: untere Umlenkrolle

## Patentansprüche

1. Linearantrieb umfassend einen von einer Antriebsvorrichtung angetriebenen, in einer geführten linearen Bewegung entlang einer Führung beweglichen Schlitten (18) sowie eine bewegliche Energiekette umfassend Leitungen zur Versorgung mindestens eines mittels des Linearantriebs verfahrbaren Aggregats mit elektrischer Energie und/oder einem Medium, wobei die Energiekette (21) innerhalb eines stationären Gehäuses (10) des Linearantriebs angeordnet ist, gegenüber dem der Schlitten des Linearantriebs verfahrbar ist und wobei das stationäre Gehäuse (10) in dem sich die Energiekette (21) befindet, nach außen hin weitgehend geschlossen ausgebildet ist, **dadurch gekennzeichnet, dass** das stationäre Gehäuse (10), welches auch die Energiekette (21) umschließt, in demjenigen Bereich, in dem der verfahrbare Schlitten (18) mindestens teilweise aus dem stationären Gehäuse (10) herausgeführt ist, durch ein Abdeckband (15) verschlossen ist, welches zusammen mit dem Schlitten (18) verfahrbar ist, und dass das Abdeckband (15) als endlos umlaufendes Band ausgebildet ist mit einem Lasttrum (15 a), welches mit dem Schlitten (18) kraftschlüssig verbunden ist und einem zu dem Lasttrum etwa parallel und mit Abstand verlaufenden Leertrum (15 b), über das das Abdeckband nachführbar bzw. zurückführbar ist.

2. Linearantrieb nach Anspruch 1, **dadurch gekennzeichnet, dass** sich das stationäre Gehäuse (10) in Längsrichtung entlang der Verfahrrichtung des Schlittens (18) erstreckt.

3. Linearantrieb nach einem der Ansprüche 1 oder 2, **dadurch gekennzeichnet, dass** das stationäre Gehäuse (10) im montierten Zustand des Linearantriebs unterhalb oder oberhalb des Schlittens (18) oder neben dem Schlitten angeordnet ist.

4. Linearantrieb nach einem der Ansprüche 1 bis 3, **dadurch gekennzeichnet, dass** das stationäre Gehäuse (10) neben der Energiekette (21) auch die wesentlichen Elemente der Antriebsvorrichtung des Linearantriebs aufnimmt.

5. Linearantrieb nach einem der Ansprüche 1 bis 4, **dadurch gekennzeichnet, dass** das stationäre Gehäuse (10), welches auch die Energiekette (21) umschließt, eine langgestreckte, im Querschnitt polygonale, insbesondere rechteckige Geometrie aufweist oder eine etwa zylindrische Geometrie.

6. Linearantrieb nach Anspruch 5, **dadurch gekennzeichnet, dass** das stationäre Gehäuse (10) eine insgesamt etwa quaderförmige Geometrie aufweist und das Abdeckband (15) mindestens eine der Flächen der Quaderform verschließt oder das stationäre Gehäuse (10) eine insgesamt etwa zylindrische Geometrie aufweist und das Abdeckband (15) eine sich über einen Teilumfang der Zylinderform erstreckende Teilfläche des Zylindermantels verschließt.

7. Linearantrieb nach einem der Ansprüche 1 bis 6, **dadurch gekennzeichnet, dass** das Abdeckband (15) jeweils etwa in den endseitigen Bereichen des Gehäuses (10) über Umlenkrollen (24, 25) geführt ist.

8. Linearantrieb nach einem der Ansprüche 1 bis 7, **dadurch gekennzeichnet, dass** das Abdeckband (15) in den Korpus des Schlittens (18) integriert ist und vorzugsweise den Schlitten (18) in dessen Querrichtung durchsetzt.

9. Linearantrieb nach einem der Ansprüche 1 bis 8, **dadurch gekennzeichnet, dass** der Schlitten (18) eine Schlittenplatte (18 a) umfasst, in deren Bereich Aktuatoren anbringbar sind, wobei diese Aktuatoren vorzugsweise im Bereich einer Fläche des Schlittens (18), die der Verbindung des Schlittens zu der Antriebsvorrichtung gegenüberliegt, anbringbar sind.

10. Linearantrieb nach einem der Ansprüche 1 bis 9, **dadurch gekennzeichnet, dass** als Antriebsvorrichtung für die Erzeugung einer translatorischen Bewegung des Schlittens (18) entlang der Linearachse ein Kugelgewindetrieb (Spindelantrieb), Zahnriemenantrieb, ein elektrischer Linearmotor (19) oder eine hydraulische oder pneumatische Antriebseinrichtung vorgesehen ist.

11. Linearantrieb nach einem der Ansprüche 1 bis 10, **dadurch gekennzeichnet, dass** die Energiekette (21) mit einem ersten Ende an dem Schlitten 18 angebracht ist und mit einem zweiten Ende (21 b) an einer Seitenwand (11) des stationären Gehäuses (10) angebracht ist, welche in Querrichtung gesehen dem ersten Ende (21 a) gegenüberliegt.

12. Linearantrieb nach einem der Ansprüche 1 bis 11, **dadurch gekennzeichnet, dass** die Energiekette (21) in der Draufsicht gesehen in der linken Hubendlage in etwa eine J-Form einnimmt.

13. Linearantrieb nach einem der Ansprüche 1 bis 12, **dadurch gekennzeichnet, dass** für den Schlitten des Linearantriebs eine schmierstofffreie Führung aus Kunststoff und/oder Metall, vorzugsweise aus einer Werkstoffkombination Kunststoff/Metall vorgesehen ist.

## Claims

1. A linear drive comprising a carriage (18), which is driven by a drive device and is movable in a guided linear movement along a guide, and a movable energy chain comprising lines for supplying electrical energy and/or a medium to at least one unit movable by means of the linear drive, wherein the energy chain (21) is arranged within a stationary housing (10) of the linear drive, relative to which the carriage of the linear drive is movable, and wherein the stationary housing (10) in which the energy chain (21) is situated is largely closed to the outside, **characterised in that** the stationary housing (10), which also encloses the energy chain (21), is closed by a covering belt (15) in the region in which the movable carriage (18) is guided at least partially out of the stationary housing (10), which covering belt is movable together with the carriage (18), and the covering belt (15) is designed as a continuously circulating belt with a tight side (15a), which is force-fittingly connected to the carriage (18), and a slack side (15b), which runs approximately parallel to and at a distance from the tight side and via which the covering belt can be fed and returned.

2. The linear drive according to Claim 1, **characterised in that** the stationary housing (10) extends in the longitudinal direction along the movement direction of the carriage (18).

3. The linear drive according to one of Claims 1 or 2, **characterised in that** the stationary housing (10) is arranged below or above the carriage (18) or next to the carriage when the linear drive is in the assembled state.

4. The linear drive according to one of Claims 1 to 3, **characterised in that** the stationary housing (10) also receives the essential elements of the drive device of the linear drive in addition to the energy chain (21).

5. The linear drive according to one of Claims 1 to 4, **characterised in that** the stationary housing (10), which also encloses the energy chain (21), has an elongate geometry of polygonal, in particular rectangular, cross section or an approximately cylindrical geometry.

6. The linear drive according to Claim 5, **characterised in that** the stationary housing (10) has an approximately cuboid geometry overall, and the covering belt (15) closes at least one of the faces of the cuboid shape, or the stationary housing (10) has an approximately cylindrical geometry overall, and the covering belt (15) closes a part-face of the cylinder lateral surface extending over a part-circumference of the cylinder shape.

7. The linear drive according to one of Claims 1 to 6, **characterised in that** the covering belt (15) is guided over deflection rollers (24, 25) approximately in the end regions of the housing (10).

8. The linear drive according to one of Claims 1 to 7, **characterised in that** the covering belt (15) is integrated in the body of the carriage (18) and preferably passes through the carriage (18) in the transverse direction thereof.

9. The linear drive according to one of Claims 1 to 8, **characterised in that** the carriage (18) comprises a carriage plate (18a) in the region of which actuators can be attached, wherein these actuators can preferably be attached in the region of a face of the carriage (18) which is opposite the connection of the carriage to the drive device.

10. The linear drive according to one of Claims 1 to 9, **characterised in that** a ball screw drive (spindle drive), toothed belt drive, an electric linear motor (19) or a hydraulic or pneumatic drive device is provided as the drive device for generating a translational movement of the carriage (18) along the linear axis.

11. The linear drive according to one of Claims 1 to 10, **characterised in that** the energy chain (21) is attached by a first end to the carriage (18) and by a second end (21b) to a side wall (11) of the stationary housing (10) opposite the first end (21a) as seen in the transverse direction.

12. The linear drive according to one of Claims 1 to 11, **characterised in that** the energy chain (21) assumes approximately a J shape in the left-hand travel end position, as seen from above.

13. The linear drive according to one of Claims 1 to 12, **characterised in that** a lubricant-free guide consisting of plastic and/or metal, preferably of a plastic/metal material combination, is provided for the carriage of the linear drive.

## Revendications

1. Système d'entraînement linéaire comprenant un coulisseau (18) entraîné par un dispositif d'entraînement, mobile dans un mouvement linéaire guidé le long d'un guidage et une chaîne énergétique mobile comprenant des conduits pour l'alimentation d'au moins un groupe déplaçable au moyen du système d'entraînement linéaire en énergie électrique et/ou avec un milieu, sachant que la chaîne énergétique (21) est disposée à l'intérieur d'un carter fixe (10) du système d'entraînement linéaire, par rapport auquel le coulisseau du système d'entraînement linéaire peut être déplacé et sachant que le carter fixe (10) dans lequel se trouve la chaîne énergétique (21), est constitué largement fermé vers l'extérieur, **caractérisé en ce que** le carter fixe (10), lequel entoure également la chaîne énergétique (21), est fermé par une bande de couverture (15), laquelle peut être déplacée ensemble avec le coulisseau (18), dans la zone dans laquelle le coulisseau (18) mobile est au moins en partie sorti du carter fixe (10) et **en ce que** la bande de couverture (15) est constituée sous la forme d'une bande circulant en continu avec un brin sous charge (15a), lequel est relié par conformité de force au coulisseau (18) et un brin de retour (15b) passant à peu près parallèlement et à distance du brin sous charge par lequel la bande de couverture peut être compensée ou rattachée.

2. Système d'entraînement linéaire selon la revendication 1, **caractérisé en ce que** le carter fixe (10) s'étend dans la direction longitudinale le long de la direction de déplacement du coulisseau (18).

3. Système d'entraînement linéaire selon l'une quelconque des revendications 1 ou 2, **caractérisé en ce que** le carter fixe (10) est disposé à l'état monté du système d'entraînement linéaire en dessous ou au-dessus du coulisseau (18) ou près du coulisseau.

4. Système d'entraînement linéaire selon l'une quelconque des revendications 1 à 3, **caractérisé en ce que** le carter fixe (10) loge en plus de la chaîne énergétique (21) également les éléments essentiels du dispositif d'entraînement du système d'entraînement linéaire.

5. Système d'entraînement linéaire selon l'une quelconque des revendications 1 à 4, **caractérisé en ce que** le carter fixe (10), lequel ferme également la chaîne énergétique (21), comporte une géométrie allongée, polygonale en section, en particulier rectangulaire, ou une géométrie à peu près cylindrique.

6. Système d'entraînement linéaire selon la revendication 5, **caractérisé en ce que** le carter fixe (10) comporte dans l'ensemble une géométrie à peu près parallélépipédique et la bande de couverture (15) ferme au moins une des surfaces de la forme parallélépipédique ou le carter fixe (10) comporte dans l'ensemble une géométrie à peu près cylindrique et la bande de couverture (15) ferme une partie de surface de l'enveloppe cylindrique s'étendant sur une partie périphérique de la forme cylindrique.

7. Système d'entraînement linéaire selon l'une quelconque des revendications 1 à 6, **caractérisé en ce que** la bande de couverture (15) est respectivement guidée à peu près dans les zones extrêmes du carter (10) par des rouleaux de renvoi (24, 25).

8. Système d'entraînement linéaire selon l'une quelconque des revendications 1 à 7, **caractérisé en ce que** la bande de couverture (15) est intégrée dans le corps du coulisseau (18) et traverse de préférence le coulisseau (18) dans la direction transversale de celui-ci.

9. Système d'entraînement linéaire selon l'une quelconque des revendications 1 à 8, **caractérisé en ce que** le coulisseau (18) comprend un plateau de coulisseau (18a) dans la zone duquel peuvent être placés des actionneurs, sachant que ces actionneurs peuvent être placés de préférence dans la zone d'une surface du coulisseau (18), qui est opposée à la liaison du coulisseau au dispositif d'entraînement.

10. Système d'entraînement linéaire selon l'une quelconque des revendications 1 à 9, **caractérisé en ce qu'**une vis d'entraînement à billes (entraînement de broche), un entraînement à courroie crantée, un moteur linéaire électrique (19) ou un système d'entraînement hydraulique ou pneumatique est prévu en tant que dispositif d'entraînement pour générer un mouvement translatoire du coulisseau (18) le long de l'axe linéaire.

11. Système d'entraînement linéaire selon l'une quelconque des revendications 1 à 10, **caractérisé en ce que** la chaîne énergétique (21) est placée avec une première extrémité sur le coulisseau (18) et est placée avec une deuxième extrémité (21b) sur une paroi latérale (11) du carter fixe (10), laquelle, vue en direction transversale, est opposée à la première extrémité (21a)

12. Système d'entraînement linéaire selon l'une quelconque des revendications 1 à 11, **caractérisé en ce que** la chaîne énergétique (21), vue de dessus, adopte une forme à peu près en J dans la position finale de levage gauche.

13. Système d'entraînement linéaire selon l'une quelconque des revendications 1 à 12, **caractérisé en ce qu'**un guidage sans lubrifiant en matière plastique et/ou en métal, de préférence dans une combinaison de matériaux Matière plastique/Métal, est prévu pour le coulisseau du système d'entraînement linéaire.
